Europäisches Patentamt

European Patent Office

Office européen des brevets

(11) Publication number: **0 421 804 A1**

# EUROPEAN PATENT APPLICATION

(21) Application number: 90310922.1

(22) Date of filing: 04.10.90

(51) Int. Cl.⁵: **F16G 5/16**

(30) Priority: 05.10.89 JP 116572/89 U

(43) Date of publication of application:
**10.04.91 Bulletin 91/15**

(84) Designated Contracting States:
**DE GB NL**

(71) Applicant: **NISSAN MOTOR CO., LTD.**
**No.2, Takara-cho, Kanagawa-ku**
**Yokohama City(JP)**

(72) Inventor: **Maruyama, Noboru**
**2-1-1-401, Namiki**
**Kanazawa-ku, Yokohama City(JP)**

(74) Representative: **Godwin, Edgar James et al**
**MARKS & CLERK 57-60 Lincoln's Inn Fields**
**London, WC2A 3LS(GB)**

(54) **Transmission belt.**

(57) Push elements (4) slidably arranged on a carrier (5) have inclined side surfaces (4a) to contact V-shaped pulley groove walls. Each side surface (4a) has a substantially planar area (11) and a bevel (10) which slopes away from an imaginary extended plane (40) of the adjacent planar area (11), preferably at an angle of no more than 1°.

# FIG.1

## TRANSMISSION BELT

The present invention relates to a transmission belt, and more particularly to a transmission belt comprising a number of push elements slidably arranged on a carrier, the carrier including, for example, one or two belt packets, the push elements being arranged one behind another in the longitudinal direction thereof. Such a transmission belt is described, for example, in U.S. Pat. No. 4,080,841, No. 4,303,403, and No. 4,729,758.

A transmission belt provided with such push elements js used for transmitting a relatively large torque between two V-shaped pulleys in which spacing between V-shaped pulley groove defining walls can be varied to establish a desired speed ratio between the pulleys. In such an arrangement, rotary motion is transmitted between the pulleys using a pushing force, which is transmitted by the array of push elements.

In such a transmission belt, each push element has an outwardly facing guide surface that is in contact with an inner surface of the carrier and two inclined side surfaces which are adapted to come into contact with the V-shaped groove defining walls.

U.S. Pat. No. 4,729,758 discloses a transmission belt which comprises a carrier made of two belt packets and a plurality of push elements arranged on the carrier in face-to-face contacting relationship to fill substantially the entire length of the carrier. Each push element has an outwardly facing guide surface that is adapted to contact with an inner surface of the carrier, and two inclined side surfaces which are adapted to cooperate with the walls defining the V-shaped pulley groove. In operation, the push elements come into engagement with the V-shaped groove defining walls one after another.

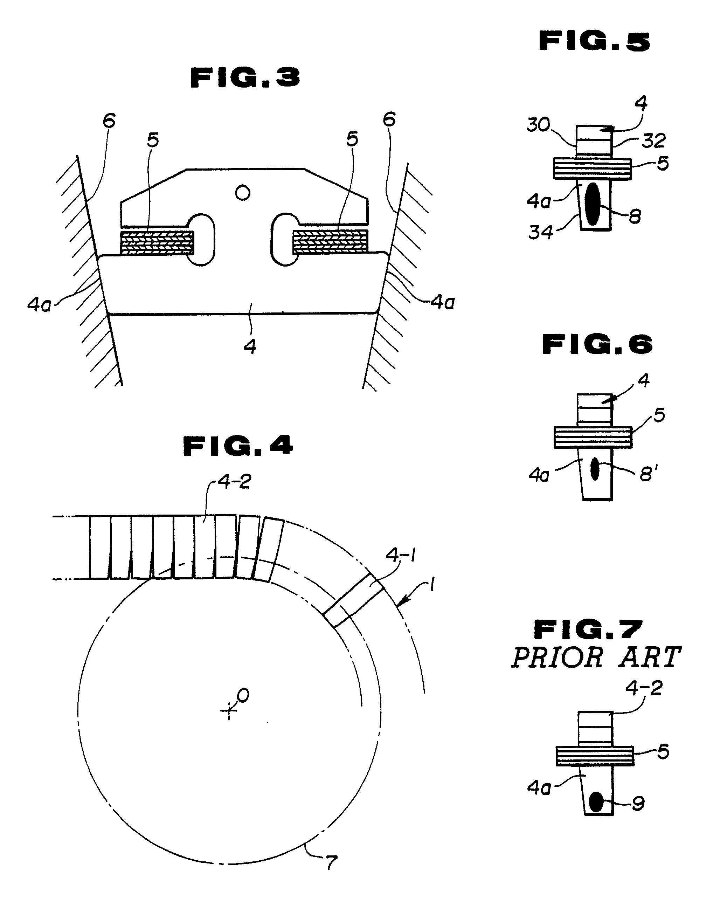

It has been experimentally established that, during a transition from an initial engagement with the V-shaped groove defining walls to a firm engagement with them, there is a possibility that the push elements make corner contact with the adjacent V-shaped pulley groove defining walls. Fig. 7 shows an area 9 on the inclined side surface 4a of the push element 4-2 which is in the initial engagement with the V-shaped pulley groove defining walls (see also Fig. 4). As readily seen from Fig. 7, each of the push elements has an inner end portion, which is tapered and thus relatively thin, subject to an impact through the area 9. This local stress causes a short life span of the push elements.

An object of the present invention is to provide a transmission belt which has push elements, each having two inclined side surfaces which are so having two inclined side surfaces which are so configured as to avoid the above-mentioned corner contact with the adjacent V-shaped pulley groove defining walls.

According to the present invention, there is provided a transmission belt comprising a plurality of push elements slidably arranged on a carrier in a face-to-face contacting relationship, wherein each of the push elements has two inclined side surfaces, each having a substantially planar area and a bevel which slopes away from an imaginary extended plane of the adjacent planar area.

Each of the push elements has a rear face, and a front face which, at the inner end of the element, is provided with a taper. The transition between the taper and that part of the front face which is parallel to the rear face is formed by a front tilting line.

Preferably, the transition between the planar area and the bevel of each of the inclined side surfaces is formed by a side tilting line, and the distance between the front tilting line the side tilting line is greater than or equal to zero but less than or equal to $H/2$, wherein $H$ indicates the distance between the front tilting line and the inner end of the push element.

Preferably, the bevel meets with the planar area at an angle less than or equal to one degree.

## BRIEF DESCRIPTION OF THE DRAWINGS

Fig. 1 is a front view of a push element of a transmission belt, illustating the principle of the invention in an exaggerated manner;

Fig. 1a is a side view of the push element shown in Fig. 1;

Fig. 2 is a perspective view of driver and follower pulleys of a continuously variable transmission with a transmission belt interconnecting the pulleys;

Fig. 3 is a diagrammatic view illustrating the push element in firm engagement with the adjacent V-shaped pulley groove defining walls;

Fig. 4 is a diagram illustrating a push element 4-1 which is coupled completely with the V-shaped groove and thus in firm engagement with the walls defining the V-shaped groove, and a push element 4-2 which is in initial engagement with the V-shaped groove defining walls;

Fig. 5 is a side view of the push element illustrating an area 8 at which the push element is in contact with the adjacent V-shaped groove defining wall when the push element is in the firm engagement state;

Fig. 6 is a side view of the push element illustrating an area 8' at which the push element is in contact with the adjacent V-shaped groove defining wall; and

Fig. 7 is a similar view of the push element according to the prior art discussed before.

## DETAILED DESCRIPTION

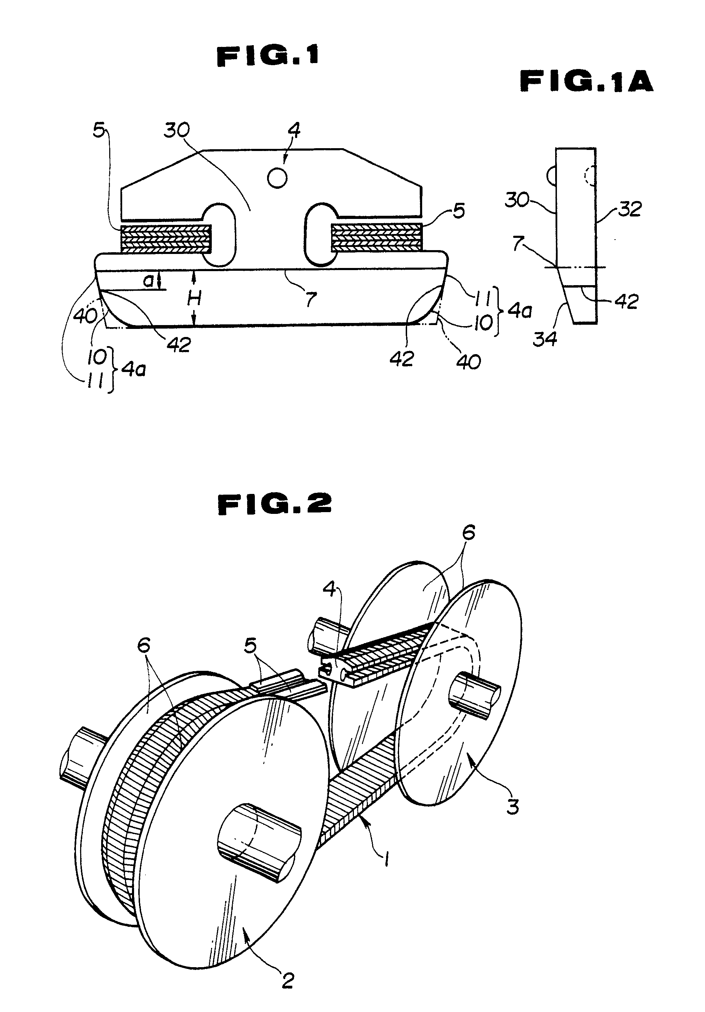

Referring to Fig. 2, two V-shaped pulleys 2 and 3 interconnected by a transmission belt 1 are shown. The running diameters of that portions of the transmission belt 1 which wind around the pulleys 2 and 3 can be varied by controlling the spacing of V-shaped groove defining walls 6 of the pulleys 2 and 3. Thus, a speed ratio between the pulleys 2 and 3 can be varied.

The transmission belt 1 comprises a plurality of push elements 4 slidably arranged on a carrier 5 including two metallic belt packets, each packet being in the form of laminated thin metallic belts. The push elements 4 are slidably arranged on the carrier 5 in face-to-face relationship to fill substantially the entire length of the carrier 5.

Referring to Figs. 1 and 1A, the push element has parallel front and rear faces 30 and 32 which come into contact with the faces of successive push elements when assembly on the carrier 5 has taken place. The front face 30, at the inner end portion of the push element, is provided with a taper 34 which slopes away from the adjacent push element. Thus, the thickness of the push element 4 decreases toward the inner end. The transition between that part of the front face 30 which is parallel to the rear face 32 is formed by a front tilting line 7. During bending of the transmission belt 1, the push elements 4 are in contact with each other through he front tilting line 7.

As shown in Fig. 1 in an exaggerated manner, the push element 4 has two inclined side surfaces 4a adapted to contact with the V-shaped pulley groove walls 6. Each of the inclined side surfaces 4a has a substantially planar area 11 and, at the inner end of the element, is provided with a bevel 10 which slopes away from an imaginary extended plane 40 of the adjacent planar area 11. The transition between the planar area 11 and the bevel 10 is formed by a side roll-off zone or tilting line 42. When the transmission belt 1 is completely coupled with the V-shaped pulley groove and the push element 4 is in the firm engagement with the V-shaped pulley groove walls 6, not only the planar area 11 but also the bevel 10 of each of the side surfaces 4 come into firm contact with the V-shaped groove defining walls 6.

The distance between the front tilting line 7 and the inner end of the element is indicated by H and the distance between the front tilting line 7 and the side tilting line 42 is indicated by a .

According to the invention, the bevel 10 should meet with the adjacent planar area 11 at a sufficiently small angle, preferably less than or equal to one degree. The side tilting line 42 should be disposed between the front tilting line 7 and the inner end of the element. The distance a should be greater than or equal to zero but less than or equal to H/2. Thus, the distance a can be expressed as $0 \leq a \leq H/2$.

Preferably, the surface of the bevel 10 is slightly curved to form a part of a circle or a parabola.

Owing to the provision of the bevel 10 on each of the side surfaces 4a, the corner contact which has been encountered in the prior art has been avoided. Fig. 6 shows an area 8' at which the side surface 4a contacts with the V-shaped groove defining wall when the push element 4 is in the initial engagement with the V-shaped pulley groove defining walls 6. From comparison of the location of the area 8' with that of the area 9 shown in Fig. 7, it will be seen that the corner contact which has been encountered in the prior art has been avoided. Fig. 5 shows an area 8 at which the side surface 4a contacts with the V-shaped pulley groove defining wall 6 when the push element 4 is in the firm engagement with the V-shaped pulley groove defining walls 6. From comparison of Fig. 5 with Fig. 6, it will be seen that the contact area increases and stretches over the bevel 10 when the push element comes into firm engagement with the V-shaped pulley groove walls 6. It is experimentally established that the side surfaces 4a are compressed when the push element 4 comes into firm engagement with the V-shaped pulley groove walls 6 and thus the bevel 10 also comes into contact with the adjacent wall 6.

## Claims

1. A transmission belt (4) comprising a plurality of push elements (4) slidably arranged on a carrier (5) in a face-to-face contacting relationship, characterised in that each push element (4) has two inclined side surfaces (4a) each having a substantially planar area (11) and a bevel (10) which slopes away from an imaginary extended plane (40) of the adjacent planar area (11).

2. A transmission belt as claimed in claim 1, wherein the transition between the planar area (11) and the bevel (10) occurs at a side tilting line (42).

3. A transmission belt as claimed in claim 2, wherein each push element has a rear face (32), and a front face (30) which, at the inner end of the element, is provided with a taper (34), and the transition between the taper (34) and that part of the front face (30) which is parallel to the rear face (32) occurs at a front tilting line (7).

4. A transmission belt as claimed in claim 3, wherein the distance (a) between the front tilting line (7) and the side tilting line (42) is greater than or equal to zero but less than or equal to half the distance (H) between the front tilting line (7) and the inner end of the push element (4).

5. A transmission belt as claimed in any preceding claim, wherein the bevel (10) makes an angle of at most 1° with the imaginary extended plane (40).

**FIG.1**

**FIG.1A**

**FIG.2**

# FIG.3

# FIG.4

# FIG.5

# FIG.6

# FIG.7
## PRIOR ART

European
Patent Office

EUROPEAN SEARCH
REPORT

Application Number

EP 90 31 0922

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | PATENT ABSTRACTS OF JAPAN, vol. 11, no. 125 (M-582)[2572], 18th April 1987; & JP-A-61 266 844 (HONDA MOTOR) 26-11-1986 — — — | 1,2 | F 16 G 5/16 |
| X | FR-A-2 540 953 (R.N.U.R.) * Page 4, line 8 - page 5, line 1; figures 4,5,6 * — — — | 1,2,3 | |
| X | EP-A-0 153 453 (HONDA) * Figure 4 * — — — | 1,2 | |
| X | EP-A-0 125 757 (HONDA) * Figures 3,4 * — — — | 1,2 | |
| A | EP-A-0 329 206 (VAN DOORNE'S TRANSMISSIE) * Column 2, line 50 - column 3, line 1; figure 2 * — — — | 3 | |
| D,A | US-A-4 729 758 (ABO) — — — | | |
| D,A | US-A-4 303 403 (LAMERS) — — — | | |
| D,A | US-A-4 080 841 (VOLLERS) — — — — — | | TECHNICAL FIELDS SEARCHED (Int. Cl.5) F 16 G |

The present search report has been drawn up for all claims

| Place of search | Date of completion of search | Examiner |
|---|---|---|
| The Hague | 17 January 91 | BARON C. |